# EUROPEAN PATENT APPLICATION

(11) **EP 4 844 904 A1**
(43) Date of publication of application: **25.11.2026**
(21) Application number: 24928006.6
(22) Date of filing: 14.08.2024
(51) Int. Cl.: H01M 50/147, H01M 50/645

(54) **TOP COVER ASSEMBLY, BATTERY CELL, BATTERY, AND ELECTRIC DEVICE**

(30) Priority: 04.03.2024 CN 202410244917
(71) Applicant: Contemporary Amperex Technology Co., Limited, Ningde, Fujian 352100 (CN)
(72) Inventor: XIE, Ming, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); KONG, Pan, Ningde, Fujian 352100 (CN)
(74) Representative: Aera A/S
(86) International application number: PCT/CN2024/112062
(87) International publication number: WO 2025/185075

(57) **Abstract**

A top cover assembly, a battery cell, a battery, and an electric device, relating to the technical field of batteries. The top cover assembly comprises a top cover, a first magnetic member, a filter screen and a second magnetic member; the top cover is provided with an electrolyte injection hole; the first magnetic member is mounted on the top cover; the filter screen is mounted on the top cover and covers the electrolyte injection hole; the second magnetic member is movably mounted in the filter screen; the first magnetic member and the second magnetic member are oppositely arranged in the axial direction of the electrolyte injection hole; the second magnetic member is configured to be attracted by the first magnetic member to abut against the top cover to seal the electrolyte injection hole.

## Description

### CROSS-REFERENCE TO RELATED APPLICATION

The present application is filed based on and claims priority to Chinese patent application No. 202410244917.X filed on March 04, 2024, which is incorporated herein by reference in its entirety.

### TECHNICAL FIELD

The present application relates to the field of batteries, and in particular to a top cover assembly, a battery cell, a battery, and an electrical apparatus.

### BACKGROUND

In recent years, new energy vehicles have undergone remarkable development. In the field of electric vehicles, power batteries, as the power sources of electric vehicles, play an irreplaceable important role. In general power batteries, the unreasonable structure of the top cover assembly leads to low yield and poor quality of a battery cell. For example, when an electrolyte solution is injected into a case of the battery cell, an electrolyte solution injection nozzle is usually placed at a top end of the case, the electrolyte solution injection nozzle is placed against an electrolyte solution injection hole before the electrolyte solution is injected, and the electrolyte solution injection nozzle is lifted up after the electrolyte solution is injected. At this point, the electrolyte solution on the electrolyte solution injection nozzle will inevitably drip around the electrolyte solution injection hole, causing electrolyte solution contamination of the battery cell. This electrolyte solution contamination greatly affects the yield and quality of subsequent sealing nail welding. Also for example, in the sealing nail welding process, the interior of the battery cell is under normal pressure. During welding, it is impossible to guarantee that the interior of the cell is under a negative pressure environment. As a result, the battery cell retains less gas during the later charge and discharge cycles, which greatly affects the lifespan of the battery.

### SUMMARY

The present application provides a top cover assembly, a battery cell, a battery, and an electrical apparatus, aiming to improve the yield and quality of the battery cell.

In a first aspect, an embodiment of the present application provides a top cover assembly applied in a battery. The top cover assembly includes: a top cover, a first magnetic member, a filter screen, and a second magnetic member. The top cover is provided with an electrolyte solution injection hole. The first magnetic member is mounted on the top cover. The filter screen is mounted on the top cover and covers the electrolyte solution injection hole. The second magnetic member is movably mounted inside the filter screen. The first magnetic member and the second magnetic member are arranged opposite to each other along an axial direction of the electrolyte solution injection hole, and the second magnetic member is configured to be adsorbable by the first magnetic member to abut against the top cover to block the electrolyte solution injection hole.

In the aforementioned technical solution, by disposing the first magnetic member and the second magnetic member, and movably mounting the second magnetic member inside the filter screen, the second magnetic member can slide between the filter screen and the top cover. When the second magnetic member is located at a position for avoiding the electrolyte solution injection hole and the meshes on the filter screen, the internal environment of the battery cell can be communicated with the external environment, facilitating electrolyte solution injection or evacuating. When the second magnetic member is located at a position abutting against the top cover, the internal environment of the battery cell can be isolated from the external environment, improving the sealing performance of the battery cell and reducing the occurrence probability of electrolyte solution leakage or air intake into the battery cell disrupting the negative pressure internal environment. For a battery cell configured with the top cover assembly, during electrolyte solution injection, the battery cell can be inverted, and the electrolyte solution injection nozzle can extend from the bottom and rest against the electrolyte solution injection hole for electrolyte solution injection. If the pressure of the electrolyte solution is greater than an adsorption force between the first magnetic member and the second magnetic member, the second magnetic member will be pushed up until it reaches the bottom of the filter screen. At this time, the electrolyte solution will pass through the meshes of the filter screen under the action of the pressure and enter the battery cell. After the electrolyte solution injection is completed and before the electrolyte solution injection nozzle is removed, the pressure in the interior of the battery cell needs to be reduced. When the pressure of the electrolyte solution is less than the adsorption force between the first magnetic member and the second magnetic member, the second magnetic member will be adsorbed to the first magnetic member again to block the electrolyte solution injection hole. At this time, electrolyte leakage will not occur even if the electrolyte solution injection nozzle is removed. To take a step back, even if the electrolyte solution leaks, it will drip onto a workbench and will not cause electrolyte solution contamination on the battery cell, thereby improving the yield and quality of subsequent sealing nail welding and increasing the overall yield of the battery cell.

In some embodiments, the top cover includes a top cover body and a top bracket, the top cover body, the first magnetic member and the top bracket are sequentially stacked, the electrolyte solution injection hole sequentially passes through the top cover body and the top bracket along a stacking direction, and the second magnetic member is configured to be adsorbable by the first magnetic member to abut against a surface of the top bracket away from the first magnetic member.

In some embodiments, at least one of the top cover body and the top bracket is provided with a first groove on the surface facing each other, and the first magnetic member is mounted in the first groove.

In some embodiments, the surface of the top bracket facing away from the first magnetic member is provided with a second groove, and the second magnetic member is located in the second groove in the case where the second magnetic member is adsorbed to abut against the top bracket.

In some embodiments, a projection of an inner wall of the filter screen along an axial direction of the second groove covers a groove bottom of the second groove.

In some embodiments, the groove bottom of the second groove is provided with at least one protrusion surrounding the electrolyte solution injection hole, and the second magnetic member is configured to abut against the protrusion.

In some embodiments, the first magnetic member is annular and is disposed around the electrolyte solution injection hole.

In some embodiments, a projected area of the first magnetic member along the axial direction of the electrolyte solution injection hole is S1, and an area of the electrolyte solution injection hole is S0, satisfying: 0.1 ≤ S1 / S0 ≤ 10.

In some embodiments, a projected area of the second magnetic member along the axial direction of the electrolyte solution injection hole is S2, and the area of the electrolyte solution injection hole is S0, satisfying: 1.05 ≤ S2 / S0 ≤ 10.

In some embodiments, the second magnet is in clearance fit with the filter screen.

In some embodiments, one of the first magnetic member and the second magnetic member is a magnet, and the other is a ferromagnetic material.

In a second aspect, an embodiment of the present application provides a battery cell, including: a case, a cell, and a top cover assembly as described above; where the cell is disposed within the case; and the top cover assembly is mounted at an opening of the case.

In some embodiments, the pressure inside the case is less than atmospheric pressure.

In a third aspect, an embodiment of the present application provides a method for processing the battery cell as described in the aforementioned embodiments, including:
placing the battery cell to be injected with an electrolyte solution such that the electrolyte solution injection hole faces downward;
butting an electrolyte solution injection nozzle with the electrolyte solution injection hole, injecting the electrolyte solution into the electrolyte solution injection hole through the electrolyte solution injection nozzle, and separating the second magnetic member from the first magnetic member; and
The pressure is released in case that the electrolyte solution injection is completed, so that the second magnetic member is adsorbed with the first magnetic member.

In the method for processing the battery cell, since the top cover assembly of the battery cell is provided with the first magnetic member and the second magnetic member, and the second magnetic member is movably mounted inside the filter screen, the second magnetic member can slide between the filter screen and the top cover. When the second magnetic member is located at a position for avoiding the electrolyte solution injection hole and the meshes on the filter screen, the internal environment of the battery cell can be communicated with the external environment, facilitating electrolyte solution injection or evacuating. When the second magnetic member is located at a position abutting against the top cover, the internal environment of the battery cell can be isolated from the external environment, improving the sealing performance of the battery cell and reducing the occurrence probability of electrolyte solution leakage or air intake into the battery cell disrupting the negative pressure internal environment.

In some embodiments, after the pressure is released in case that the electrolyte solution injection is completed, so that the second magnetic member is adsorbed with the first magnetic member, the processing method further includes:
placing the battery cell such that the electrolyte solution injection hole faces upward;
extending a pushing rod into the electrolyte solution injection hole to push the second magnetic member to a position separated from the first magnetic member;
evacuating the battery cell through the electrolyte solution injection hole;
withdrawing the pushing rod when a target pressure is reached, so that the second magnetic member is adsorbed with the first magnetic member; and
mounting a sealing nail at the electrolyte solution injection hole.

In a fourth aspect, an embodiment of the present application provides a battery, including a plurality of battery cells as described in any of the aforementioned embodiments.

In a fifth aspect, an embodiment of the present application provides an electrical apparatus, including: the battery as described in any of the aforementioned embodiments, which is configured to supply electrical energy to the electrical apparatus.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded structural diagram of a battery provided in some embodiments of the present application;
FIG. 3 is a schematic structural diagram of a battery cell provided in some embodiments of the present application;
FIG. 4 is a schematic structural diagram of a top cover assembly provided in some embodiments of the present application;
FIG. 5 is a top view of the top cover assembly provided in some embodiments of the present application;
FIG. 6 is a first one of cross-sectional views taken along A-A in FIG. 5;
FIG. 7 is a partial enlarged diagram of FIG. 6;
FIG. 8 is a second one of cross-sectional views taken along A-A in FIG. 5;
FIG. 9 is a partial enlarged diagram of FIG. 8;
FIG. 10 is a first one of schematic structural diagrams of a first magnetic member and a second magnetic member provided in some embodiments of the present application;
FIG. 11 is a second one of schematic structural diagrams of the first magnetic member and the second magnetic member provided in some embodiments of the present application;
FIG. 12 is a schematic structural diagram of an inverted battery cell provided in some embodiments of the present application;
FIG. 13 is a bottom view of the battery cell provided in some embodiments of the present application;
FIG. 14 is a cross-sectional view taken along B-B in FIG. 13;
FIG. 15 is a schematic diagram of sealing nail welding provided in some embodiments of the present application;
FIG. 16 is a top view of the sealing nail welding provided in some embodiments of the present application;
FIG. 17 is a cross-sectional view taken along C-C in FIG. 16; and
FIG. 18 is a flow chart of a method for processing a battery cell as provided in some embodiments of the present application.

Reference numerals:
1. vehicle, 10. battery, 11. box body, 111. first box main body, 112. second box main body, 12. battery cell;
13. top cover assembly, 131. top cover, 1311. electrolyte solution injection hole, 1312. top cover body, 1313. top bracket, 1314. first groove, 1315. second groove, 132. first magnetic member, 133. filter screen, 134. second magnetic member;
14. case, 151. pushing rod, 152. evacuating chamber, 20. motor, and 30. controller.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms ''first,'' ''second,'' and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The occurrence of the phrase in various places in the description does not necessarily refer to the same embodiment, nor is it an independent or alternative embodiment that is mutually exclusive with other embodiments. It is explicitly and implicitly understood by those skilled in the art that the embodiments described in the present application may be combined with other embodiments.

In the description of the present application, it should be noted that the terms ''mounting'', ''connecting'', ''connection'' and ''attachment'' should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

The occurrence of "a plurality of" in the present application refers to more than two (including two) "a plurality of groups" refers to more than two groups (including two groups), and "a plurality of sheets" refers to more than two sheets (including two sheets).

The battery cell referred to in the embodiments of the present application may include a secondary lithium-ion battery cell, a primary lithium-ion battery cell, a lithium-sulfur battery cell, a sodium lithium-ion battery cell, a sodium-ion battery cell or a magnesium-ion battery cell, etc., which is not limited in the embodiments of the present application. The battery cell may be in a cylindrical shape, a flat shape, a cuboid shape or other shapes, etc., which is also not limited in the embodiments of the present application. The battery cell is generally classified into the following types depending on the way of encapsulation: a cylindrical battery cell, a square battery cell, which is also not limited in the embodiments of the present application.

The battery mentioned in the embodiments of the present application refers to a single physical module that includes one or more battery cells to provide higher voltage and capacity. For example, the battery mentioned in the present application may include a battery module, a battery pack, or the like. The battery generally includes a box body for packaging one or more battery cells or a plurality of battery modules. The box body can prevent a liquid or other foreign matters from affecting charging or discharging of the battery cell.

The battery cell includes a case, a cell, and an electrolyte solution, where the case is configured to accommodate the cell and the electrolyte solution. The cell consists of a positive electrode plate, a negative electrode plate, and a separator. The battery cell mainly works by metal ions moving between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are a plurality of positive tabs which are stacked together, and there are a plurality of negative tabs which are stacked together.

The separator may be of a material such as polypropylene (PP) or polyethylene (PE), etc. Moreover, the cell may have a wound structure or a stacked structure, which is not limited in the embodiments of the present application.

In recent years, new energy vehicles have undergone remarkable development. In the field of electric vehicles, power batteries, as the power sources of electric vehicles, play an irreplaceable important role. The battery consists of a box body and a plurality of battery cells accommodated within the box body. As a core component of a new energy vehicle, the battery must meet high requirements in terms of both safety and cycle lifespan.

The inventors have found that in general power batteries, the unreasonable structure of the top cover assembly leads to low yield and poor quality of the battery cell. For example, when an electrolyte solution is injected into a case of the battery cell, an electrolyte solution injection nozzle is usually placed at a top end of the case, the electrolyte solution injection nozzle is placed against an electrolyte solution injection hole before the electrolyte solution is injected, and the electrolyte solution injection nozzle is lifted up after the electrolyte solution is injected. At this point, the electrolyte solution on the electrolyte solution injection nozzle will inevitably drip around the electrolyte solution injection hole, causing electrolyte solution contamination of the battery cell. This electrolyte solution contamination greatly affects the yield and quality of subsequent sealing nail welding. Also for example, in the sealing nail welding process, the interior of the battery cell is under normal pressure. During welding, it is impossible to guarantee that the interior of the cell is under a negative pressure environment. As a result, the battery cell retains less gas during the later charge and discharge cycles, which greatly affects the lifespan of the battery.

Based on the aforementioned considerations, in order to reduce electrolyte solution contamination and improve the yield and quality of sealing nail welding, the inventors, after in-depth research, have designed a top cover assembly, a battery cell, a battery, and an electrical apparatus. The top cover assembly is applied to the battery and includes: a top cover, a first magnetic member, a filter screen, and a second magnetic member. The top cover has an electrolyte solution injection hole; the first magnetic member is mounted on the top cover; the filter screen is installed on the top cover and covers the electrolyte solution injection hole; and the second magnetic member is movably mounted inside the filter screen and is configured to be adsorbable by the first magnetic member to the top cover to block the electrolyte solution injection hole.

In the top cover assembly of this structure, by disposing the first magnetic member and the second magnetic member, and movably mounting the second magnetic member inside the filter screen, the second magnetic member can slide between the filter screen and the top cover. When the second magnetic member is located at a position for avoiding the electrolyte solution injection hole and the meshes on the filter screen, the internal environment of the battery cell can be communicated with the external environment, facilitating electrolyte solution injection or evacuating. When the second magnetic member is located at a position abutting against the top cover, the internal environment of the battery cell can be isolated from the external environment, improving the sealing performance of the battery cell. For a battery cell configured with the top cover assembly, during electrolyte solution injection, the battery cell can be inverted, and the electrolyte solution injection nozzle can extend from the bottom and rest against the electrolyte solution injection hole for electrolyte solution injection. If the pressure of the electrolyte solution is greater than an adsorption force between the first magnetic member and the second magnetic member, the second magnetic member will be pushed up until it reaches the bottom of the filter screen. At this time, the electrolyte solution will pass through the meshes of the filter screen under the action of the pressure and enter the battery cell. After the electrolyte solution injection is completed and before the electrolyte solution injection nozzle is removed, the pressure in the interior of the battery cell needs to be reduced. When the pressure of the electrolyte solution is less than the adsorption force between the first magnetic member and the second magnetic member, the second magnetic member will be adsorbed to the first magnetic member again to block the electrolyte solution injection hole. At this time, electrolyte leakage will not occur even if the electrolyte solution injection nozzle is removed. To take a step back, even if the electrolyte solution leaks, it will drip onto a workbench and will not cause electrolyte solution contamination on the battery cell, thereby improving the yield and quality of subsequent sealing nail welding and increasing the overall yield of the battery cell.

The battery disclosed in the embodiments of the present application can be used in, but not limited to, an electrical apparatus, such as a vehicle, a ship, or an aircraft. A power source system of the electrical apparatus may be composed of the battery thermal management system, battery, and the like disclosed in the present application, which is conducive to improving the application scope of the battery thermal management system and reducing the assembly difficulty of the battery thermal management system.

An embodiment of the present application provides an electrical apparatus in which the battery is used as a power source. The electrical apparatus may be, but is not limited to, a mobile phone, a tablet, a laptop, an electric toy, an electric tool, a storage battery car, an electric vehicle, a ship, a spacecraft, and the like. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

For convenience of description, the following embodiments are described by taking a vehicle as an example of an electrical apparatus in an embodiment of the present application.

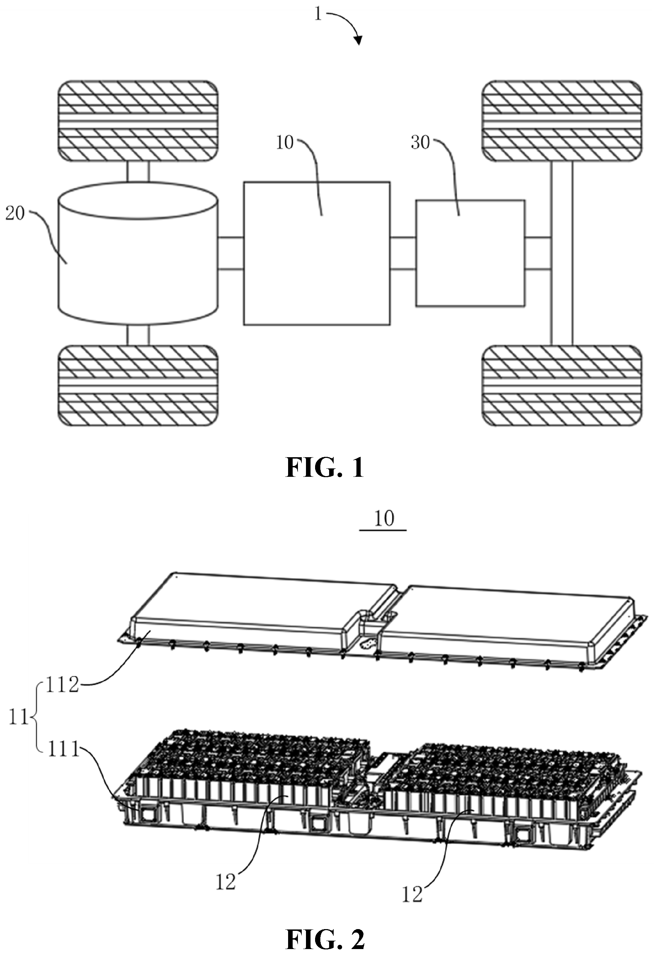

As shown in FIG. 1, FIG. 1 is a schematic structural diagram of a vehicle 1 according to an embodiment of the present application. The vehicle 1 may be a fuel vehicle, a gas vehicle or a new energy vehicle, and the new energy vehicle may be an all-electric vehicle, a hybrid electric vehicle, or an extended-range vehicle, etc. A motor 20, a controller 30, and a battery 10 may be disposed inside the vehicle 1, where the controller 30 is configured to control the battery 10 to supply power to the motor 20. For example, the battery 10 may be disposed at the bottom or the head or the tail of the vehicle 1. The battery 10 may be configured to supply power to the vehicle 1. For example, the battery 10 may be used as an operating power source of the vehicle 1, which is used for a circuit system of the vehicle 1, for example, for operation power requirements of the vehicle 1 during starting, navigation and running.

In another embodiment of the present application, the battery 10 can serve not only as an operating power supply for the vehicle 1, but also as a driving power source for the vehicle 1, so as to replace or partially replace fuel or natural air to provide driving power for the vehicle 1.

In order to meet different power usage requirements, the battery 10 may include a plurality of battery cells 12, where the plurality of battery cells 12 may be in series connection, parallel connection or series-parallel connection. The series-parallel connection refers to a combination of series connection and parallel connection.

As shown in FIG. 2, it is an exploded structural diagram of a battery 10 according to an embodiment of the present application. The battery 10 includes a box body 11 and a plurality of battery cells 12, where the battery cells 12 are configured to be accommodated in the box body 11. Here, the box body 11 is configured to provide an assembly space for the battery cells 12, and the box body 11 may be of various structures. In some embodiments, the box body 11 may include a first box main body 111 and a second box main body 112. The first box main body 111 and the second box main body 112 cover each other, and the first box main body 111 and the second box main body 112 together define an assembly space for accommodating the battery cell 12. The second box main body 112 may be a hollow structure with one end open, and the first box main body 111 may be a plate-like structure, where the first box main body 111 covers the open side of the second box main body 112, so that the first box main body 111 and the second box main body 112 together define the assembly space; and the first box main body 111 and the second box main body 112 may also both be hollow structures with one side open, with the open side of the first box main body 111 covering the open side of the second box main body 112. Certainly, the box body 11 formed by the first box main body 111 and the second box main body 112 may have various shapes, such as a cylinder, or a rectangular parallelepiped, etc.

In the battery 10, the plurality of battery cells 12 may be connected in series, in parallel, or in parallel-series, and the parallel-series connection means that the plurality of battery cells 12 are connected in both series and parallel. The plurality of battery cells 12 may be directly connected together in series or in parallel or in parallel-series, and then the whole composed of the plurality of battery cells 12 may be accommodated within the box body 11. Certainly, the battery 10 may also be in the form that the plurality of battery cells 12 are firstly connected in series or in parallel or in parallel-series to form a battery 10 module, and then a plurality of battery 10 modules are connected in series or in parallel or in parallel-series to form a whole and are accommodated within the box body 11.

Each battery cell 12 may be a secondary battery or a primary battery; or it may be a lithium-sulfur battery, a sodium-ion battery or a magnesium-ion battery, but is not limited thereto. The battery cell 12 may be in a flat shape, in a rectangular shape, or in other shapes, etc.

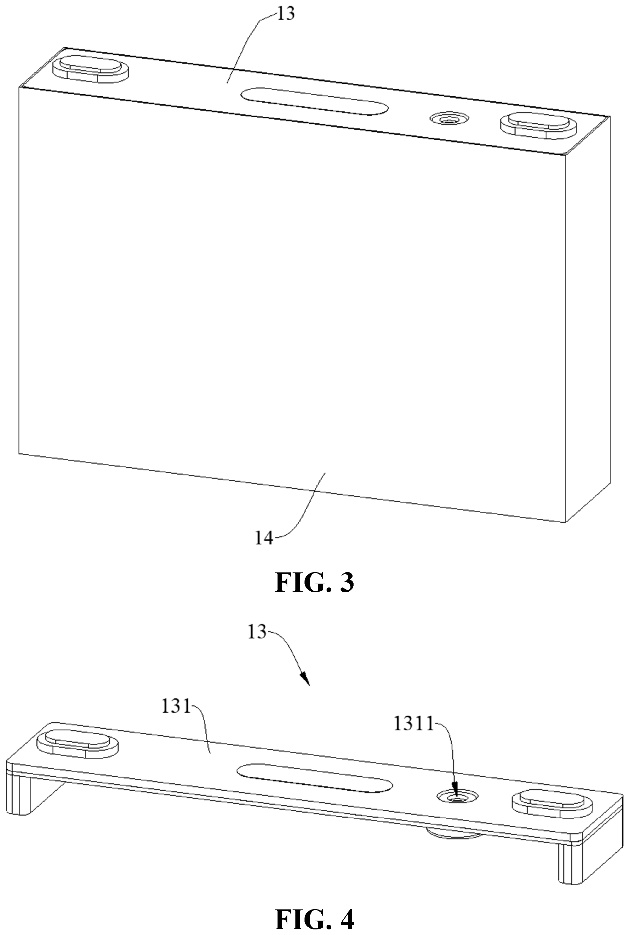

The battery cell 12 refers to a minimum unit forming the battery 10. The battery cell 12 includes a case, a cell, and an electrolyte solution, where the case is configured to accommodate the cell and the electrolyte solution. As shown in FIG. 3, the case includes a top cover assembly 13 and a case 14. The top cover assembly 13 refers to a component that covers an opening of the case 14 to isolate an internal environment of the battery cell 12 from an external environment.

The top cover assembly 13 includes a top cover 131 and a filter screen 133. The top cover 131 is provided with an electrolyte solution injection hole 1311. The electrolyte solution injection hole 1311 is configured to inject an electrolyte solution. The filter screen 133 is mounted on the top cover 131 and covers the electrolyte solution injection hole 1311. The filter screen 133 is configured to filter the injected electrolyte solution.

Without limitation, the shape of the top cover 131 may be adapted to that of the case 14 to fit the case 14. Optionally, the top cover 131 may be made of a material (such as an aluminum alloy) with a certain hardness and strength, and in this way, the top cover 131 is not easily deformed when subjected to extrusion and collisions, such that the battery cell 12 is capable of having a higher structural strength, and the reliability performance may also be improved. A functional component such as an electrode terminal may be disposed on the top cover 131. The electrode terminal may be configured to be electrically connected to the cell for outputting or inputting electric energy of the battery cell 12. In some embodiments, a pressure relief mechanism, which is configured to release an internal pressure when the internal pressure or temperature of the battery cell 12 reaches a threshold, may be further disposed on the top cover 131. The top cover 131 may be made of various materials, such as copper, iron, aluminum, stainless steel, an aluminum alloy, and plastic, etc., which is not specially limited in the embodiments of the present application. In some embodiments, an insulating component may be further disposed on an inner side of the top cover 131, and the insulating component may be configured to isolate an electrical connection component within the case 14 from the top cover 131, to reduce the risk of short circuit. Illustratively, the insulating component may be made of plastic, rubber, and the like.

The case 14 is an assembly for fitting the top cover 131 to form the internal environment of the battery cell 12, where the formed internal environment may be configured to accommodate the cell, the electrolytic solution, and other components.

The case 14 and the top cover 131 may be separate components, the case 14 may be provided with an opening thereon, and the internal environment of the battery cell 12 is formed by causing the top cover 131 to cover the opening at the opening. Without limitation, the top cover 131 and the case 14 may also be integrated. Specifically, the top cover 131 and the case 14 may form one common connection face before other components are put into the case. When the interior of the case 14 needs to be encapsulated, the top cover 131 is then caused to cover the case 14. The case 14 may be in various shapes and various sizes, such as a cuboid shape, a cylinder shape, and a hexagonal prism shape. Specifically, the shape of the case 14 may be determined according to the specific shape and size of the cell. The case 14 may be made of various materials, such as copper, iron, aluminum, stainless steel, an aluminum alloy, and plastic, etc., which is not specially limited in the embodiments of the present application.

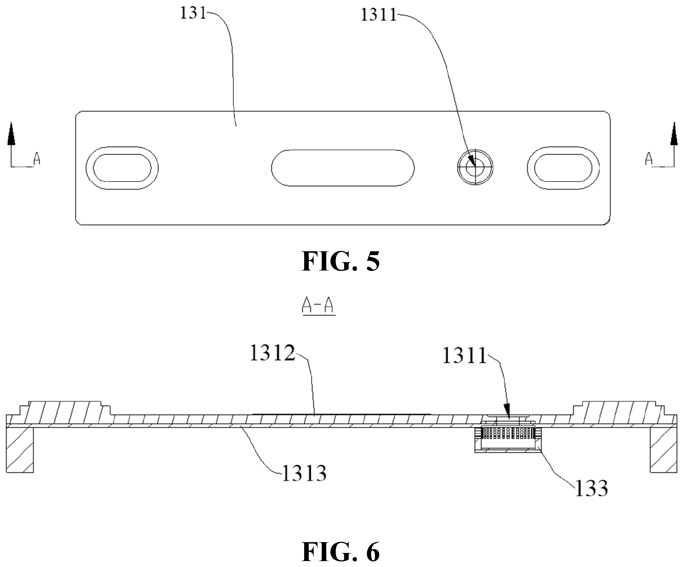

According to some embodiments of the present application, as shown in FIGs. 4 and 5, the present application provides a top cover assembly 13 applied to a battery 10. The top cover assembly 13 includes: a top cover 131, a first magnetic member 132, a filter screen 133, and a second magnetic member 134. The top cover 131 is provided with an electrolyte solution injection hole 1311. The first magnetic member 132 is mounted on the top cover 131. The filter screen 133 is mounted on the top cover 131 and covers the electrolyte solution injection hole 1311. The second magnetic member 134 is movably mounted inside the filter screen 133. The first magnetic member 132 and the second magnetic member 134 are arranged opposite to each other along the axial direction of the electrolyte solution injection hole 1311, and are configured to be adsorbable by the first magnetic member 132 to abut against the top cover 131 to block the electrolyte solution injection hole 1311.

The top cover 131 is configured to mate with the case 14 to form the internal environment of the battery cell 12. The electrolyte solution injection hole 1311 communicates the internal environment and the external environment of the battery cell 12.

The filter screen 133 covers an electrolyte solution injection hole 1311, and the filter screen 133 is configured to filter the electrolyte solution that enters the case 14 through the electrolyte solution injection hole 1311. The filter screen 133 can be a non-magnetic metal or plastic member. The filter screen 133 has a plurality of meshes, which are distributed at intervals along circumferential and axial directions. The meshes of the filter screen 133 can be square, circular, triangular, etc., and their sizes can be adjusted according to an electrolyte solution injection volume.

The first magnetic member 132 and the second magnetic member 134 can be adsorbed to each other, and the first magnetic member 132 can be mounted on the top cover 131 by means of bonding, snap-fitting or clamping, etc. The first magnetic member 132 and the second magnetic member 134 can both be magnets, or one of the first magnetic member 132 and the second magnetic member 134 can be a magnet and the other can be a ferromagnetic material.

The first magnetic member 132 and the second magnetic member 134 are arranged opposite to each other along the axial direction of the electrolyte solution injection hole 1311. The first magnetic member 132 is disposed close to the electrolyte solution injection hole 1311 so that the movement path of the second magnetic member 134 coincides with the electrolyte solution injection hole 1311.

The projected area of the second magnetic member 134 along the axial direction of the electrolyte solution injection hole 1311 is not less than the area of the electrolyte solution injection hole 1311, so as to block the electrolyte solution injection hole 1311 in case that the second magnetic member 134 abuts against the top cover 131.

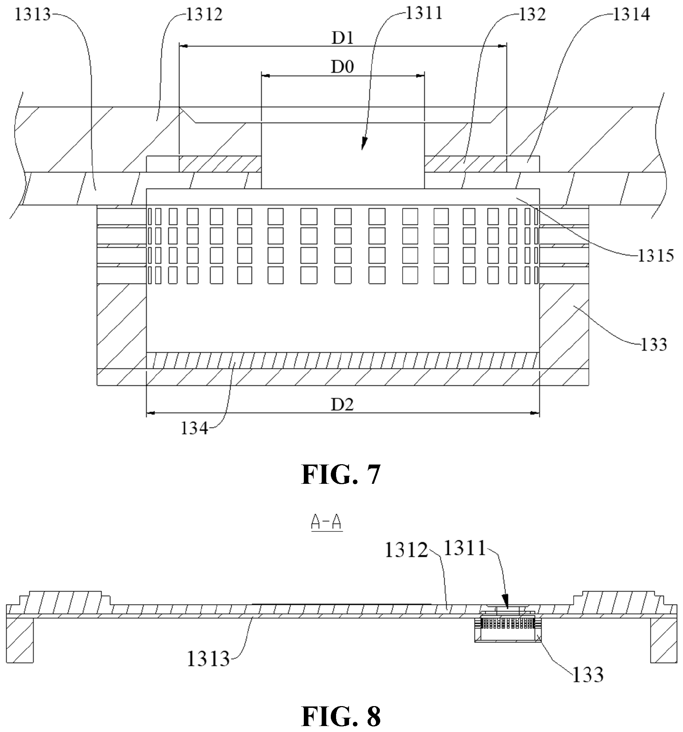

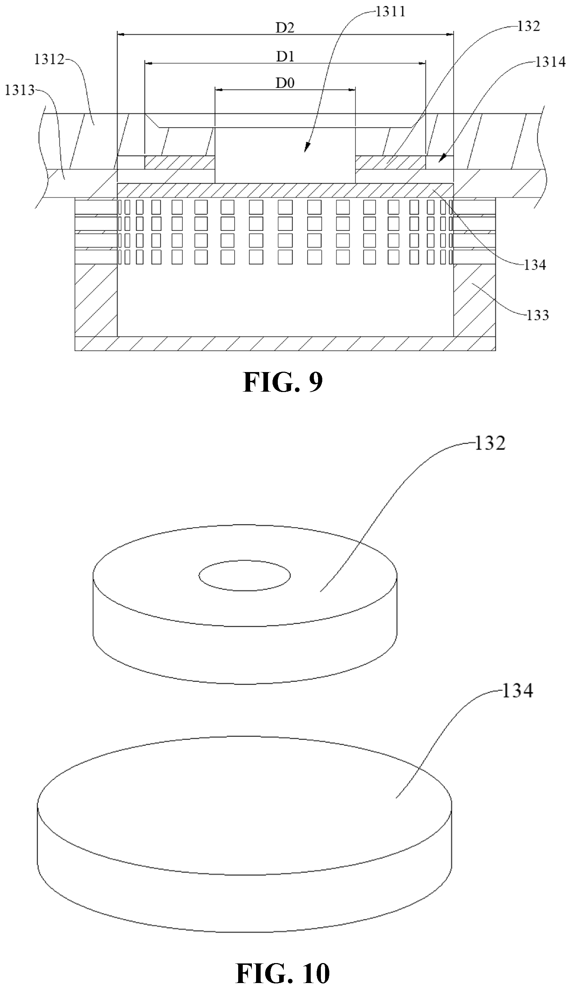

The second magnetic member 134 is slidable between the filter screen 133 and the top cover 131. When the second magnetic member 134 is located at a position for avoiding the electrolyte solution injection hole 1311 and the filter holes on the filter screen 133, the electrolyte solution can be injected into the case 14, as referring to FIGs. 6 and 7. When the second magnetic member 134 is located at a position abutting against the top cover 131, the second magnetic member 134 blocks the electrolyte solution injection hole 1311 to prevent the electrolyte solution from flowing out of the electrolyte solution injection hole 1311 and causing electrolyte solution leakage, as referring to FIGs. 8 and 9.

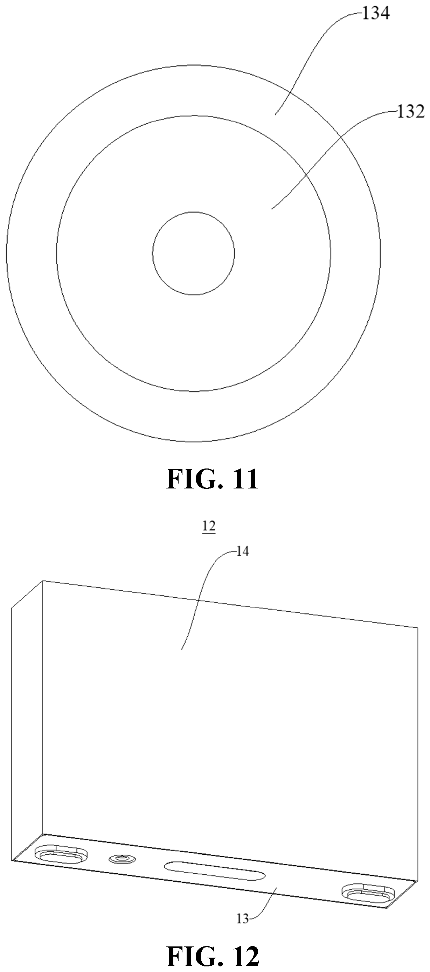

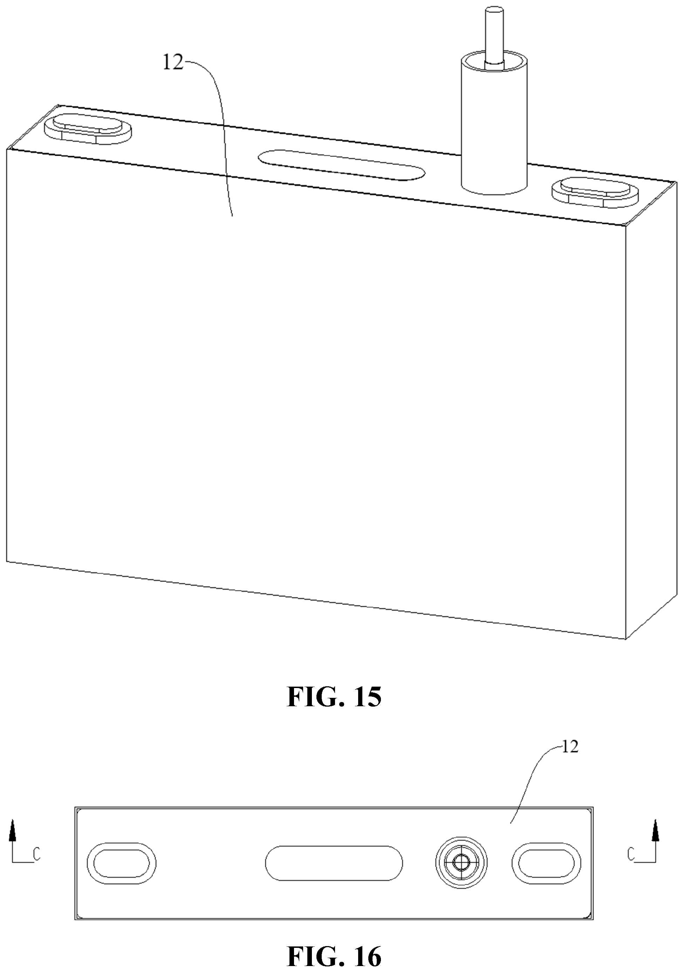

The battery cell 12 with such a structure of the top cover assembly 13 can at least achieve the inverted electrolyte solution injection condition as shown in FIGs. 12-14 and the upright negative-pressure suction condition as shown in FIGs. 15-17.

Inverted electrolyte solution injection condition: as shown in FIG. 12, the battery cell 12 to be injected with the electrolyte solution is placed until the electrolyte solution injection hole 1311 faces downward. When no electrolyte solution is injected, the states of the first magnetic member 132 and the second magnetic member 134 are shown in FIGs. 8 and 9. The electrolyte solution injection hole 1311 is blocked by the second magnetic member 134. The electrolyte solution injection nozzle can extend from the bottom and rest against the electrolyte solution injection hole 1311 for electrolyte solution injection. When the pressure of the electrolyte solution is greater than the adsorption force between the first magnetic member 132 and the second magnetic member 134, the second magnetic member 134 is pushed up until it reaches the bottom of the filter screen 133, as referring to FIGs. 6 and 7. At this time, the electrolyte solution passes through the meshes of the filter screen 133 under the action of the pressure to enter the battery cell 12. After the electrolyte solution injection is completed, the pressure inside the battery cell 12 becomes normal pressure. Then the second magnetic member 134 is adsorbed to the first magnetic member 132 again to block the electrolyte solution injection hole 1311 to ensure that the electrolyte solution does not overflow and the electrolyte solution injection is completed, as referring to FIGs. 8 and 9. The electrolyte solution on the electrolyte solution injection nozzle will not drip on the battery cell 12 to cause electrolyte solution pollution by inverted electrolyte solution injection, which improves the yield and quality of subsequent sealing nail welding and improves the yield of the battery cell 12.

Upright negative-pressure suction condition: as shown in FIG. 15, the battery cell 12 is placed until the electrolyte solution injection hole 1311 faces upwards, i.e., the battery cell 12 is placed upright, the top cover 131 of the battery cell 12 faces upward, the pushing rod 151 and the evacuating chamber 152 are pressed onto the electrolyte solution injection hole 1311, the pushing rod 151 presses down the second magnetic member 134 to a position avoiding the electrolyte solution injection hole 1311 and the filter holes on the filter screen 133, and then the evacuating chamber 152 evacuates the air from the battery cell 12, making the interior of the battery cell 12 become negative pressure. The magnitude of the negative pressure can be determined according to the actual needs of the battery cell 12. When it is evacuated to the target pressure, the pushing rod 151 can be withdrawn, and the second magnetic member 134 is adsorbed to the first magnetic member 132 again to block the electrolyte solution injection hole 1311 and ensure the interior of the battery cell 12 become negative pressure. After evacuating, sealing nail welding is conducted, so as to retain more gas in the battery cell 12 during the later charge and discharge cycle process, which greatly improves the lifespan of the battery 10.

In the top cover assembly 13 with such a structure, by disposing the first magnetic member 132 and the second magnetic member 134, and movably mounting the second magnetic member 134 inside the filter screen 133, the second magnetic member 134 can slide between the filter screen 133 and the top cover 131. When the second magnetic member 134 is located at a position for avoiding the electrolyte solution injection hole 1311 and the meshes on the filter screen 133, the internal environment of the battery cell 12 can be communicated with the external environment, facilitating electrolyte solution injection or evacuating. When the second magnetic member 134 is located at a position abutting against the top cover 131, the internal environment of the battery cell 12 can be isolated from the external environment, improving the sealing performance of the battery cell 12 and reducing the occurrence probability of electrolyte solution leakage or air intake into the battery cell 12 disrupting the negative pressure internal environment.

For a battery cell 12 configured with the top cover assembly 13, during electrolyte solution injection, the battery cell can be inverted, and the electrolyte solution injection nozzle can extend from the bottom and rest against the electrolyte solution injection hole 1311 for electrolyte solution injection. If the pressure of the electrolyte solution is greater than an adsorption force between the first magnetic member 132 and the second magnetic member 134, the second magnetic member 134 will be pushed up until it reaches the bottom of the filter screen 133. At this time, the electrolyte solution will pass through the meshes of the filter screen 133 under the action of the pressure and enter the battery cell 12. After the electrolyte solution injection is completed and before the electrolyte solution injection nozzle is removed, the pressure in the interior of the battery cell needs to be reduced. When the pressure of the electrolyte solution is less than the adsorption force between the first magnetic member 132 and the second magnetic member 134, the second magnetic member 134 will be adsorbed to the first magnetic member 132 again to block the electrolyte solution injection hole 1311. At this time, electrolyte leakage will not occur even if the electrolyte solution injection nozzle is removed. To take a step back, even if the electrolyte solution leaks, it will drip onto a workbench and will not cause electrolyte solution contamination on the battery cell 12, thereby improving the yield and quality of subsequent sealing nail welding and increasing the overall yield of the battery cell 12.

In some embodiments, as shown in FIGs. 10 and 11, the first magnetic member 132 is annular and is disposed around the electrolyte solution injection hole 1311 to avoid the electrolyte solution injection hole 1311.

In some embodiments, a projection of an inner wall of the filter screen 133 along an axial direction of the second groove 1315 covers a groove bottom of the second groove 1315.

The projection of the inner wall of the filter screen 133 along the axial direction of the second groove 1315 is not less than the groove bottom of the second groove 1315, so that the filter screen 133 completely covers the electrolyte solution injection hole 1311, preventing an unfiltered electrolyte solution from flowing into the battery cell 12 from a gap between the filter screen 133 and the second groove 1315, thereby improving the quality of the battery cell 12.

In some embodiments, the projection of the inner wall of the filter screen 133 along the axial direction of the second groove 1315 is equal to the groove bottom of the second groove 1315, so that the second magnetic member 134 smoothly slides into the second groove 1315 along the axial direction of the filter screen 133, thereby improving the reliability of the second magnetic member 134 in blocking the electrolyte solution injection hole 1311 and reducing the space of the battery cell 12 occupied by the filter screen 133 in the radial direction, thereby increasing the energy density of the battery cell 12.

In some embodiments, the second magnet is in clearance fit with the filter screen 133, so that the second magnet can smoothly move along the axial direction of the filter screen 133.

As shown in FIGs. 7 and 9, the meshes of the filter screen 133 are disposed in a section near the top cover 131 to increase the filtration area and accelerate the electrolyte solution injection speed.

In some embodiments, a projected area of the first magnetic member 132 along the axial direction of the electrolyte solution injection hole 1311 is S1, and an area of the electrolyte solution injection hole 1311 is S0, satisfying: 0.1 ≤ S1 / S0 ≤ 10.

The ratio of S1 to S0 can be 0.1, 1, 5 or 10, which can be set specially according to the usage scenario.

As shown in FIGs. 7 and 9, D1 is the diameter of the first magnetic member 132, D0 is the diameter of the electrolyte solution injection hole 1311, S1 = 0.25π(D12 - D02), and S0 = 0.25πD02.

By setting the axial area ratio of the first magnetic member 132 and the electrolyte solution injection hole 1311, the adsorption force between the first magnetic member 132 and the second magnetic member 134 can satisfy the usage requirements, thereby increasing reliability.

In some embodiments, a projected area of the second magnetic member 134 along the axial direction of the electrolyte solution injection hole 1311 is S2, and an area of the electrolyte solution injection hole 1311 is S0, satisfying: 1.05 ≤ S2 / S0 ≤ 10.

The ratio of S2 to S0 can be 1.05, 3, 5 or 10, which can be set specially according to the usage scenario.

As shown in FIGs. 7 and 9, D2 is the diameter of the second magnetic member 134, and S2 = 0.25πD22.

By setting the range of the area ratio of the second magnetic member 134 and the electrolyte solution injection hole 1311 along the axial direction, the projected area of the second magnetic member 134 along the axial direction of the electrolyte solution injection hole 1311 is not less than the area of the electrolyte solution injection hole 1311, so as to block the electrolyte solution injection hole 1311 in case that the second magnetic member 134 abuts against the top cover 131.

In some embodiments, in case that the second magnetic member 134 abuts against the top cover 131, the adsorption pressure between the first magnetic member 132 and the second magnetic member 134 is P, which satisfies: 0 MPa < P ≤ 5 MPa.

The adsorption pressure between the first magnetic member 132 and the second magnetic member 134 can be 1 MPa, 3 MPa or 5 MPa, as long as the following condition is satisfied: negative pressure < the adsorption pressure between the first magnetic member 132 and the second magnetic member 134 < electrolyte solution injection pressure.

In some embodiments, as shown in FIGs. 6 and 7, the top cover 131 includes: a top cover body 1312 and a top bracket 1313. The top cover body 1312, the first magnetic member 132, and the top bracket 1313 are stacked sequentially. The electrolyte solution injection hole 1311 passes through the top cover body 1312 and the top bracket 1313 sequentially along the stacking direction. The first magnetic member 132 is clamped between the top cover body 1312 and the top bracket 1313. The second magnetic member 134 is configured to be adsorbable by the first magnetic member 132 to the surface of the top bracket 1313 away from the first magnetic member 132.

The top cover body 1312 and the top bracket 1313 can be non-magnetic metal or plastic members to reduce interference with the movement path of the second magnetic member 134.

One endpoint in the movement stroke of the second magnetic member 134 is the surface of the top bracket 1313 facing away from the first magnetic member 132, and the other endpoint is an inner end face of the filter screen 133 opposite to the surface of the top support 1313 facing away from the first magnetic member 132.

The first magnetic member 132 is limited by the top cover body 1312 and the top bracket 1313.

In some embodiments, as shown in FIGs. 7 and 9, at least one of the top cover body 1312 and the top bracket 1313 is provided with a first groove 1314 on the surface facing each other, and the first magnetic member 132 is mounted in the first groove 1314.

The top cover body 1312 and the top bracket 1313 define the first groove 1314. The first groove 1314 can be disposed in the top cover body 1312. The first groove 1314 can also be disposed in the top bracket 1313. The first groove 1314 can also be disposed partially in the top cover body 1312 and partially in the top bracket 1313.

The diameter of the first groove 1314 is not less than the diameter of the first magnetic member 132, so as to facilitate the mounting of the first magnetic member 132.

In some embodiments, as shown in FIGs. 7 and 9, the surface of the top bracket 1313 facing away from the first magnetic member 132 is provided with a second groove 1315. In case where the second magnetic member 134 is adsorbed to abut against the top bracket 1313, the second magnetic member 134 is located in the second groove 1315.

The groove bottom of the second groove 1315 is the stroke endpoint of the second magnetic member 134. The diameter of the second groove 1315 is not less than the diameter of the second magnetic member 134, so that the second magnetic member 134 can smoothly abut against the top bracket 1313, thereby blocking the electrolyte solution injection hole 1311.

By disposing the second slot 1315, it can help to reduce the height of the filter screen 133, reduce the space of the battery cell 12 occupied by the filter screen 133 along the axial direction, improve the energy density of the battery cell 12, and prevent the filter screen 133 from abutting against the cell and causing damage to the cell.

In some embodiments, the groove bottom of the second groove 1315 is provided with at least one protrusion surrounding the electrolyte solution injection hole 1311, and the second magnetic member 134 is configured to abut against the protrusion.

There may be one or more protrusions. When the second magnetic member 134 abuts against the protrusion, stress concentration is formed at the protrusion. Compared with the surface-contact sealing, the line-contact sealing at the protrusion has a greater sealing pressure, thereby improving the reliability of the sealing.

In some embodiments, the top bracket 1313 is a plastic member with low structural rigidity of the protrusion. When the second magnetic member 134 abuts against the protrusion, stress concentration occurs at the protrusion and causes deformation, thereby forming a smaller face seal with the second magnetic member 134 and improving the reliability of the sealing.

According to some embodiments of the present application, the present application further provides a battery cell 12, including: a case 14, a cell, and a top cover assembly 13 as described in any one of the aforementioned embodiments, where the cell is disposed inside the case 14, and the top cover assembly 13 is mounted in the opening of the case 14.

The top cover assembly 13 described in any one of the aforementioned embodiments can achieve the conduction or blocking of the electrolyte solution injection hole 1311 by moving the second magnetic member 134, thereby providing the battery cell 12 of the top cover assembly 13, with a high yield and a long life.

In some embodiments, the pressure inside the case 14 is less than the atmospheric pressure, so that the battery cell 12 can retain more gas during later charge-discharge cycles, greatly improving the lifespan of the battery 10.

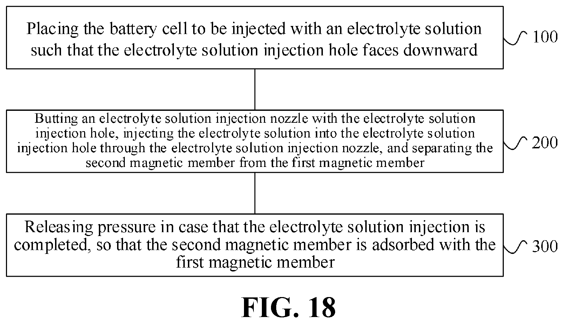

According to some embodiments of the present application, as shown in FIG. 18, the present application further provides a method for processing a battery cell 12, including: a step 100, a step 200 and a step 300.

Step 100. the battery cell 12 to be injected with an electrolyte solution is placed such that the electrolyte solution injection hole 1311 faces downward.

In this step, the battery cell 12 is placed upside down with the opening of the electrolyte solution injection hole 1311 facing downward. When no electrolyte solution is injected, the states of the first magnetic member 132 and the second magnetic member 134 are shown in FIGs. 8 and 9. The electrolyte solution injection hole 1311 is blocked by the second magnetic member 134.

Step 200. an electrolyte solution injection nozzle is butted with the electrolyte solution injection hole 1311, the electrolyte solution is injected into the electrolyte solution injection hole 1311 through the electrolyte solution injection nozzle, and the second magnetic member 134 is separated from the first magnetic member 132.

In this step, the electrolyte solution injection nozzle can extend from the bottom and rest against the electrolyte solution injection hole 1311 for electrolyte solution injection. When the pressure of the electrolyte solution is greater than the adsorption force between the first magnetic member 132 and the second magnetic member 134, the second magnetic member 134 is pushed up until it reaches the bottom of the filter screen 133, as referring to FIGs. 6 and 7. At this time, the electrolyte solution passes through the meshes of the filter screen 133 under the action of the pressure to enter the battery cell 12.

In the step 300, pressure is released in case that the electrolyte solution injection is completed, so that the second magnetic member 134 is adsorbed with the first magnetic member 132.

In this step, the pressure is released after the electrolyte solution injection is completed, the pressure inside the battery cell 12 becomes normal pressure. Then the second magnetic member 134 is adsorbed to the first magnetic member 132 again to block the electrolyte solution injection hole 1311 to ensure that the electrolyte solution does not overflow and the electrolyte solution injection is completed, as referring to FIGs. 8 and 9.

In this embodiment, the electrolyte solution on the electrolyte solution injection nozzle will not drip on the battery cell 12 to cause electrolyte solution pollution by inverted electrolyte solution injection, which improves the yield and quality of subsequent sealing nail welding and improves the yield of the battery cell 12.

In the method for processing the battery cell 12, since the top cover assembly 13 of the battery cell 12 is provided with the first magnetic member 132 and the second magnetic member 134, and the second magnetic member 134 is movably mounted inside the filter screen 133, the second magnetic member 134 can slide between the filter screen 133 and the top cover 131. When the second magnetic member 134 is located at a position for avoiding the electrolyte solution injection hole 1311 and the meshes on the filter screen 133, the internal environment of the battery cell 12 can be communicated with the external environment, facilitating electrolyte solution injection or evacuating. When the second magnetic member 134 is located at a position abutting against the top cover 131, the internal environment of the battery cell 12 can be isolated from the external environment, improving the sealing performance of the battery cell 12 and reducing the occurrence probability of electrolyte solution leakage or air intake into the battery cell 12 disrupting the negative pressure internal environment.

In some embodiments, after the step 300, the method for processing the battery cell 12 further includes:
placing the battery cell 12 such that the electrolyte solution injection hole 1311 faces upward.

In this step, as shown in FIGs. 15 and 16, the battery cell 12 is placed upright, and the battery cell 12 is placed until the electrolyte solution injection hole 1311 facing upward, the top cover 131 of the battery cell 12 faces upward, and the electrolyte solution injection hole 1311 is blocked by the second magnetic member 134.

A pushing rod 151 extends into the electrolyte solution injection hole 1311 to push the second magnetic member 134 to a position separated from the first magnetic member 132.

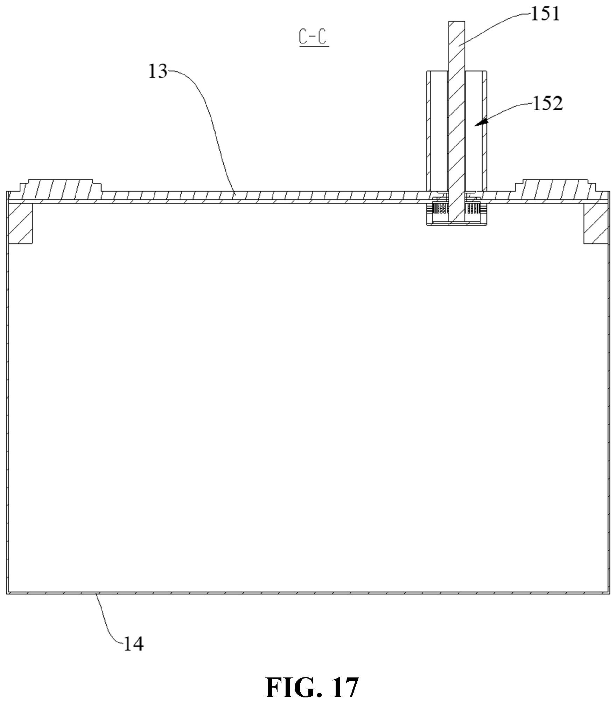

In this step, the pushing rod 151 and the evacuating chamber 152 are pressed onto the electrolyte solution injection hole 1311, and the pushing rod 151 presses down the second magnetic member 134 until it reaches the bottom of the filter screen 133, as referring to FIG. 17.

The battery cell 12 is evacuated through the electrolyte solution injection hole 1311.

In this step, the evacuating chamber 152 evacuates the air from the battery cell 12, allowing the interior of the battery cell 12 to become negative pressure. The magnitude of the negative pressure can be determined according to the actual needs of the battery cell 12.

In case a target pressure is reached, the pushing rod 151 is withdrawn, so that the second magnetic member 134 is adsorbed with the first magnetic member 132.

In this step, when it is evacuated to the target pressure, the pushing rod 151 can be withdrawn, and the second magnetic member 134 will be adsorbed to the first magnetic member 132 again to block the electrolyte solution injection hole 1311 and thus ensure the negative pressure inside the battery cell 12.

The target pressure is a pressure value determined according to the actual needs of the battery cell 12.

A sealing nail is mounted at the electrolyte solution injection hole 1311.

In this step, the sealing nail welding is conducted after evacuating. At this time, the second magnetic member 134 is located in the second groove 1315, so that more gas can be retained in the battery cell 12 during the later charge-discharge cycle process, which greatly improves the lifespan of the battery 10.

According to some embodiments of the present application, the present application further provides a battery 10, including a plurality of battery cells 12 as described in any of the aforementioned embodiments.

The aforementioned battery cell 12 has the advantages of a high yield and a long lifespan, so that the battery 10 having the battery cell 12 has a high yield and a long lifespan.

According to some embodiments of the present application, the present application further provides an electrical apparatus, including: the battery 10 as described in any of the aforementioned embodiments, and the battery 10 is configured to supply electrical energy to the electrical apparatus.

The electrical apparatus may be any one of the aforementioned devices or systems in which the battery 10 is applied.

The aforementioned battery 10 has a high yield and a long lifespan, so that the electrical apparatus including the battery 10 can reduce the frequency of replacing the battery 10 and has a low cost.

According to some embodiments of the present application, the battery cell 12 with such a structure of the top cover assembly 13 can at least achieve the inverted electrolyte solution injection condition as shown in FIGs. 12-14 and the upright negative-pressure suction condition as shown in FIGs. 15-17.

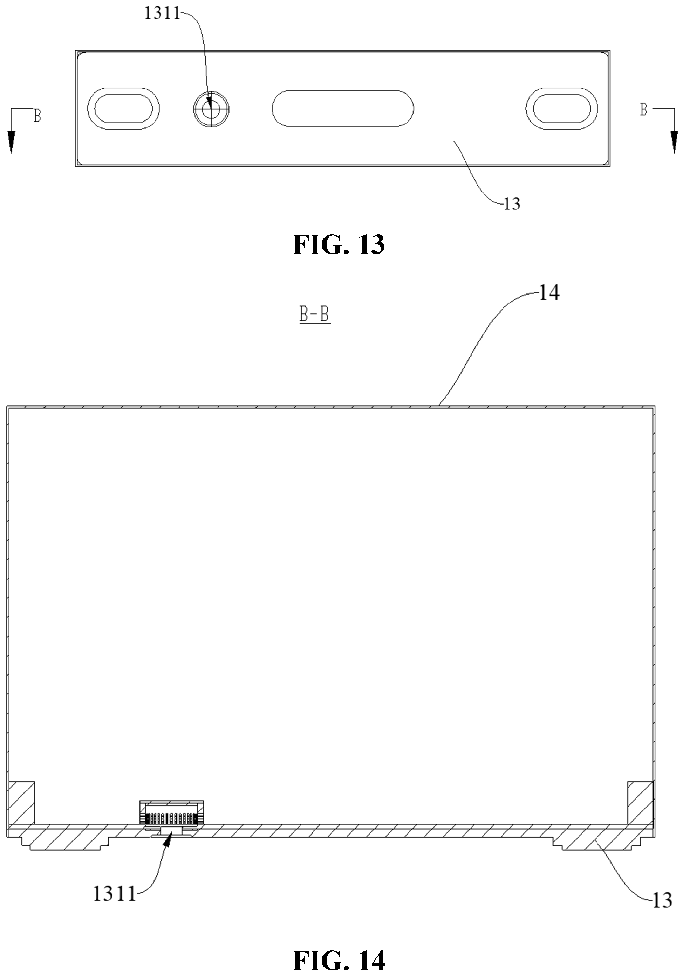

Inverted electrolyte solution injection condition: as shown in FIGs. 12 and 14, the battery cell 12 is inverted. When no electrolyte solution is injected, the states of the first magnetic member 132 and the second magnetic member 134 are shown in FIGs. 8 and 9. The first magnetic member 132 is located in the first groove 1314, the second magnetic member 134 is located in the second groove 1315, and the electrolyte solution injection hole 1311 is blocked by the second magnetic member 134. The electrolyte solution injection nozzle can extend from the bottom and rest against the electrolyte solution injection hole 1311 for electrolyte solution injection. When the pressure of the electrolyte solution is greater than the adsorption force between the first magnetic member 132 and the second magnetic member 134, the second magnetic member 134 is pushed up until it reaches the bottom of the filter screen 133, as referring to FIGs. 6 and 7. At this time, the electrolyte solution passes through the meshes of the filter screen 133 under the action of the pressure to enter the battery cell 12. After the electrolyte solution injection is completed, the pressure inside the battery cell 12 becomes normal pressure. Then the second magnetic member 134 is adsorbed to the first magnetic member 132 again to ensure that the electrolyte solution does not overflow and the electrolyte solution injection is completed, as referring to FIGs. 8 and 9. At this time, the second magnetic member 134 is located in the second groove 1315. The electrolyte solution on the electrolyte solution injection nozzle will not drip on the battery cell 12 to cause electrolyte solution pollution by inverted electrolyte solution injection, which improves the yield and quality of subsequent sealing nail welding and improves the yield of the battery cell 12.

Upright negative-pressure suction condition: as shown in FIGs. 15 and 16, the battery cell 12 is placed upright, the top cover 131 of the battery cell 12 faces upward, the pushing rod 151 and the evacuating chamber 152 are pressed onto the electrolyte solution injection hole 1311, the pushing rod 151 presses down the second magnetic member 134 until it reaches the bottom of the filter screen 133, as referring to FIG. 17, and then the evacuating chamber 152 evacuates the air from the battery cell 12, making the interior of the battery cell 12 become negative pressure. The magnitude of the negative pressure can be determined according to the actual needs of the battery cell 12. When it is evacuated to the target pressure, the pushing rod 151 can be withdrawn, and the second magnetic member 134 is adsorbed to the first magnetic member 132 again to block the electrolyte solution injection hole 1311 and ensure the interior of the battery cell 12 become negative pressure. After evacuating, sealing nail welding is conducted. At this time, the second magnetic member 134 is located in the second groove 1315, so that more gas can be retained in the battery cell 12 during the later charge-discharge cycle process, which greatly improves the lifespan of the battery 10.

It is to be noted that, without conflict, the embodiments in the present application and the features in the embodiments may be combined with each other.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A top cover assembly applied to a battery, comprising:
a top cover provided with an electrolyte solution injection hole;
a first magnetic member mounted on the top cover;
a filter screen mounted on the top cover and covering the electrolyte solution injection hole; and
a second magnetic member movably mounted inside the filter screen, wherein the first magnetic member and the second magnetic member are arranged opposite to each other along an axial direction of the electrolyte solution injection hole, and the second magnetic member is configured to be adsorbable by the first magnetic member to abut against the top cover to block the electrolyte solution injection hole.

2. The top cover assembly according to claim 1, wherein the top cover comprises a top cover body and a top bracket, the top cover body, the first magnetic member and the top bracket are sequentially stacked, the electrolyte solution injection hole sequentially passes through the top cover body and the top bracket along a stacking direction, and the second magnetic member is configured to be adsorbable by the first magnetic member to abut against a surface of the top bracket away from the first magnetic member.

3. The top cover assembly according to claim 2, wherein at least one of the top cover body and the top bracket is provided with a first groove on the surface facing each other, and the first magnetic member is mounted in the first groove.

4. The top cover assembly according to claim 2 or 3, wherein the surface of the top bracket facing away from the first magnetic member is provided with a second groove, and the second magnetic member is located in the second groove in the case where the second magnetic member is adsorbed to abut against the top bracket.

5. The top cover assembly according to claim 4, wherein a projection of an inner wall of the filter screen along an axial direction of the second groove covers a groove bottom of the second groove.

6. The top cover assembly according to claim 4 or 5, wherein the groove bottom of the second groove is provided with at least one protrusion surrounding the electrolyte solution injection hole, and the second magnetic member is configured to abut against the protrusion.

7. The top cover assembly according to any one of claims 2-6, wherein the first magnetic member is annular and is disposed around the electrolyte solution injection hole.

8. The top cover assembly according to claim 7, wherein a projected area of the first magnetic member along the axial direction of the electrolyte solution injection hole is S1, and an area of the electrolyte solution injection hole is S0, satisfying: 0.1 ≤ S1 / S0 ≤ 10.

9. The top cover assembly according to any one of claims 1-8, wherein a projected area of the second magnetic member along the axial direction of the electrolyte solution injection hole is S2, and the area of the electrolyte solution injection hole is S0, satisfying: 1.05 ≤ S2 / S0 ≤ 10.

10. The top cover assembly according to any one of claims 1-9, wherein the second magnet is in clearance fit with the filter screen.

11. The top cover assembly according to any one of claims 1-10, wherein one of the first magnetic member and the second magnetic member is a magnet, and the other is a ferromagnetic material.

12. A battery cell, comprising:
a case;
a cell disposed within the case; and
the top cover assembly according to any one of claims 1-11, which is mounted at an opening of the case.

13. The battery cell according to claim 12, wherein a pressure in the case is less than atmospheric pressure.

14. A method for processing the battery cell according to claim 12 or 13, comprising:
placing the battery cell to be injected with an electrolyte solution such that the electrolyte solution injection hole faces downward;
butting an electrolyte solution injection nozzle with the electrolyte solution injection hole, injecting the electrolyte solution into the electrolyte solution injection hole through the electrolyte solution injection nozzle, and separating the second magnetic member from the first magnetic member; and
releasing the pressure in case that the electrolyte solution injection is completed, so that the second magnetic member is adsorbed with the first magnetic member.

15. The method for processing the battery cell according to claim 14, wherein after the pressure is released in case that the electrolyte solution injection is completed, so that the second magnetic member is adsorbed with the first magnetic member, the processing method further comprises:
placing the battery cell such that the electrolyte solution injection hole faces upward;
extending a pushing rod into the electrolyte solution injection hole to push the second magnetic member to a position separated from the first magnetic member;
evacuating the battery cell through the electrolyte solution injection hole;
withdrawing the pushing rod when a target pressure is reached, so that the second magnetic member is adsorbed with the first magnetic member; and
mounting a sealing nail at the electrolyte solution injection hole.

16. A battery, comprising:
a plurality of battery cells according to claim 12 or 13.

17. An electrical apparatus, comprising:
the battery according to claim 16, which is configured to supply electrical energy to the electrical apparatus.
